# EUROPÄISCHE PATENTSCHRIFT

(11) **EP 3 217 495 B1**
(45) Veröffentlichungstag und Bekanntmachung des Hinweises auf die Patenterteilung: **17.08.2022**
(21) Anmeldenummer: 16159477.5
(22) Anmeldetag: 09.03.2016
(51) Int. Cl.: H02G 3/04, H02G 3/34, E04F 19/04

(54) **KABELKANAL**
CABLE CHANNEL
GOULOTTE ELECTRIQUE

(43) Veröffentlichungstag der Anmeldung: 13.09.2017
(73) Patentinhaber: GGK GmbH & Co. KG, 35753 Greifenstein (DE)
(72) Erfinder: MÜLLER, Eckhard, 35781 Weilburg (DE)
(74) Vertreter: advotec.

(56) Entgegenhaltungen:
- EP-A2- 2 309 613
- DE-A1- 4 103 708
- DE-A1-102009 036 491
- DE-U1- 9 406 088
- DE-U1- 29 911 658
- DE-U1-202009 010 674
- FR-A1- 2 157 956
- US-A- 6 084 180
- US-B1- 6 333 461

## Beschreibung

Die vorliegende Erfindung betrifft einen Kabelkanal gemäß Anspruch 1.

Kabelkanäle der eingangs genannten Art dienen zur Aufnahme elektrischer Leitungen, die insbesondere an nachträglich installierte Steckdosen und Schalter angeschlossen werden. Derartige Kabelkanäle, die regelmäßig in Bestandsgebäuden zur Kabelinstallation und Spannungsversorgung von nachträglich installierten elektrischen Verbrauchern benötigt werden, werden häufig als sogenannte Sockelleistenkanäle ausgeführt, die in Doppelfunktion neben einer eingehäusten Anordnung der Versorgungskabel die gleichzeitige Ausbildung von Fußleisten oder Sockelleisten ermöglichen.

Der nachträglichen Installation von Spannungsversorgungskabeln in Bestandsgebäuden kommt zunehmende Bedeutung zu, da der Elektrisierungsgrad bzw. die Ausstattung von Wohngebäuden mit elektrischen Aktuatoren ständig zunimmt, insbesondere in Kombination mit einer externen berührungslosen Ansteuerung der Geräte, die unter dem Begriff "Smarthome" für die Ansteuerung der Geräte via auf Smartphones herunter geladene Apps propagiert wird.

Die Montage von Kabelkanälen erweist sich in der Praxis als aufwändig, da das Einlegen der Leitungen in die Kabelkanalbasis bei von der Kanalbasis getrennter Kanalabdeckung erfolgt, die während des Einlegens der Kabel häufig noch mit einer Hand gehalten werden muss, um die Montage der Kanalabdeckung auf der Kanalbasis möglichst schnell durchführen zu können und zu verhindern, dass die in die Kanalbasis eingelegten Leitungen aus dieser nicht herausfallen. Aus diesem Grunde erweist sich auch die Überprüfung einer ausgeführten elektrischen Verbindung, die mittels der in der Kanalbasis eingelegten Leitungen erfolgt, als umständlich, da selbst zur temporären Sicherung der Leitungen in der Kabelkanalbasis die Kanalabdeckung mit der Kabelkanalbasis zunächst verbunden und ggf. dann wieder entfernt werden muss.

Aus der DE 41 03 708 A1 ist ein Kabelkanal mit einer Kanalbasis und einer Kanalabdeckung bekannt, bei dem die Kanalbasis und die Kanalabdeckung an ihren Längsrändern über eine Rastverbindung miteinander verbunden sind. In einer Einlegekonfiguration des Kabelkanals, in der zwischen einem oberen Längsrand der Kanalbasis und einem oberen Längsrand der Kanalabdeckung ein Einlegespalt zum Einlegen von Leitungen in den Leitungsaufnahmeraum der Kanalbasis ausgebildet ist, erfolgt lediglich zwischen dem unteren Längsrand der Kanalbasis und dem unteren Längsrand der Kanalabdeckung die Herstellung einer Rastverbindung, wobei ein am unteren Längsrand der Kanalabdeckung ausgebildeter Stützsteg in einen als Rastnut ausgebildeten Aufnahmerand am unteren Längsrand der Kanalbasis eingeführt wird, wobei eine Einführungsöffnung der Aufnahmenut unter Krafteinwirkung aufgeweitet wird.

Die DE 20 2009 010 674 U1 zeigt einen Kabelkanal mit einer Kanalbasis und einer Kanalabdeckung, bei der die oberen und unteren Längsränder der Kanalbasis und der Kanalabdeckung miteinander verrastet sind. Kabelkanäle mit einer Kanalbasis und einer Kanalabdeckung, wobei obere und untere Längsränder der Kanalbasis und der Kanalabdeckung miteinander verrastet sind, sind ebenso aus der DE 94 06 088 U1, der FR 2157956 A1 und der DE 299 11 658 U1 bekannt. EP 2 309 613 A2 offenbart einen Inneneck zum Kaschieren der Lücke zwischen zwei etwa im rechten Winkel stumpf anstoßenden Kabelkanalabschnitten.

Auch die US 6,084,180 A zeigt einen Kabelkanal mit einer Kanalbasis und einer Kanalabdeckung, bei der die unteren und oberen Längsränder der Kanalbasis und der Kanalabdeckung über eine Rastverbindung miteinander verbunden sind. Zur Herstellung einer Einlegekonfiguration des Kabelkanals, erfolgt ein Einführen eines am unteren Längsrand der Kanalbasis ausgebildeten Stützstegs in einen am unteren Längsrand der Kanalabdeckung ausgebildeten Auflagerkanal, wobei gleichzeitig mit dem Einführen des Stützstegs in den Auflagerkanal eine Rastverbindung hergestellt wird.

Der vorliegenden Erfindung liegt daher die Aufgabe zugrunde, einen Kabelkanal vorzuschlagen, der eine temporäre sichere Aufnahme der Leitungen im Kabelkanal auch bei einer nicht mit der Kabelkanalbasis verriegelten Kanalabdeckung ermöglicht.

Zur Lösung dieser Aufgabe weist der erfindungsgemäße Kabelkanal eine benachbart einem unteren Längsrand des Kabelkanals ausgebildete Verbindungseinrichtung auf, die zumindest abschnittsweise einen sich in Längsrichtung des Kabelkanals erstreckenden, an einer Innenseite der Kanalabdeckung angeordneten Stützsteg aufweist mit einer auf seiner Unterseite ausgebildeten Stützfläche, wobei der Stützsteg in einen am unteren Längsrand der Kanalbasis ausgebildeten Auflagerkanal mit einander gegenüberliegenden Stützwänden eingreift, derart, dass in einer Einlegekonfiguration des Kabelkanals in der zwischen einem oberen Längsrand der Kanalbasis und einem oberen Längsrand der Kanalabdeckung ein Einlegespalt zum Einlegen von Leitungen in den Leitungsaufnahmeraum der Kanalbasis ausgebildet ist, und der Stützsteg in den Auflagerkanal eingeführt ist, zwischen dem Stützrand des Stützstegs und der oberen Stützwand des Auflagerkanals sowie der Stützfläche des Stützstegs und der unteren Stützwand des Auflagerkanals eine die Kanalabdeckung an der Kanalbasis sichernde Momentenstütze ausgebildet ist.

Erfindungsgemäß ist die Stützfläche durch eine konvexe Oberfläche der Unterseite des Stützstegs gebildet.

Erfindungsgemäß weist der Stützsteg auf seiner Oberseite einen Freiraum auf, in den ein am freien Ende der oberen Stützwand ausgebildeter Raststeg hinein ragt, und an einem Stützstegfuß ist eine Rastnut ausgebildet, derart, dass ausgehend von der Einlegekonfiguration zur verriegelnden Verbindung zwischen der Kanalabdeckung und der Kanalbasis ein verrastender Eingriff des Raststegs in die Rastnut erfolgt.

In einer bevorzugten Ausführungsform weist der Stützsteg ein an den Stützstegfuß anschließendes rinnenförmiges Stegprofil auf.

Bevorzugt ist es auch, wenn der obere Stützrand des Auflagerkanals durch einen Trennsteg der Kanalbasis gebildet ist.

Zur Ausbildung der zweiten Verbindungseinrichtung kann ein Verriegelungssteg an der Innenseite der Kanalabdeckung ausgebildet sein, mit einer an einem Verriegelungsstegfuß ausgebildeten Rastnut zum verrastenden Eingriff mit einem an einem Trennsteg der Kanalbasis ausgebildeten Raststeg und einer an den Verriegelungsstegfuß anschließenden, formelastischen Führungslasche mit einer mit dem Raststeg den Trennstegs zusammen wirkenden Führungsfläche.

Vorzugsweise ist zur Ausbildung einer dritten Verbindungseinrichtung am oberen Längsrand der Kanalabdeckung ein einen Rastrand am oberen Längsrand der Kanalbasis übergreifender Rastrand ausgebildet, wobei der Rastrand der Kanalbasis in einem zu einer Installationsfläche zur Befestigung der Montagerückwand ausgebildeten Abstand angeordnet ist, derart, dass der Rastrand der Kanalabdeckung bei einem Rasteingriff mit der Kanalbasis eine zwischen der Installationsfläche und dem Rastrand der Kanalbasis gebildete Aufnahmenut im Wesentlichen vollständig ausfüllt.

Vorzugsweise weisen die Trennstege eine unterschiedliche Stegbreite auf.

Besonders bevorzugt ist es, wenn der dem oberen Längsrand der Kanalbasis benachbarte Trennsteg eine geringere Stegbreite aufweist als der darunter liegende Trennsteg.

Nachfolgend werden bevorzugte Ausführungsformen der Erfindung anhand der Zeichnung näher erläutert.

Es zeigen:
- **Fig. 1:**: einen Kabelkanal mit einer Kanalbasis und einer Kanalabdeckung in einer ersten Ausführungsform in isometrischer Darstellung;
- **Fig. 2:**: eine Seitenansicht des in **Fig. 1** dargestellten Kabelkanals;
- **Fig. 3:**: einen Kabelkanal mit einer auf der Kanalbasis montierten Kanalabdeckung in einer zweiten Ausführungsform und isometrischer Darstellung;
- **Fig. 4:**: den in **Fig. 3** dargestellten Kabelkanal in Seitenansicht;
- **Fig. 5:**: den in **Fig. 1** dargestellten Kabelkanal in einer Anfangsphase der Montage der Kanalabdeckung auf der Kanalbasis;
- **Fig. 6:**: eine Seitenansicht der in **Fig. 5** dargestellten isometrischen Darstellung;
- **Fig. 7:**: den in **Fig. 5** dargestellten Kabelkanal in einer Einlegekonfiguration.

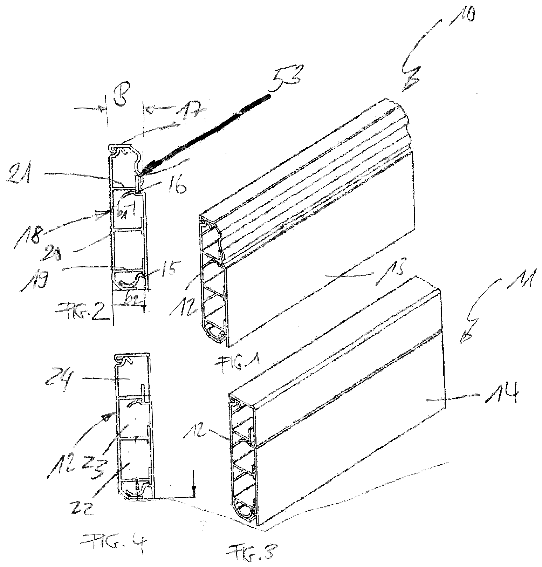

In den **Fig. 1** bis **4** sind Kabelkanäle 10, 11 dargestellt, die eine übereinstimmend ausgebildete Kanalbasis 12 mit einer austauschbar mit der Kanalbasis 12 verbindbaren Kanalabdeckung 13 (**Fig. 1** und **2**) und 14 (**Fig. 3** und **4**) aufweisen.

Wie die **Fig. 2** und **4** zeigen, sind die Kanalabdeckungen 13, 14 im vorliegenden Fall mit einer insgesamt drei Verbindungseinrichtungen 15, 16 und 17 aufweisenden Verbindungsanordnung versehen.

Die Kanalbasis 12 weist eine Montagerückwand 18 und drei im vorliegenden Fall horizontal von der Montagerückwand 18 ausgehende Trennstege 19, 20 und 21 auf, die einen im Kabelkanal 10, 11 ausgebildeten Leitungsaufnahmeraum in drei Kanalabteile 22, 23, 24 unterteilen. Die Trennstege 19, 20 und 21 weisen an ihren freien Enden im vorliegenden Fall vertikal an den Trennstegen 19, 20, 21 ausgebildete Rückhaltestege auf, die im vorliegenden Fall sämtlich an ihrem unteren Ende mit einem nach unten ragenden Raststeg 29 versehen sind.

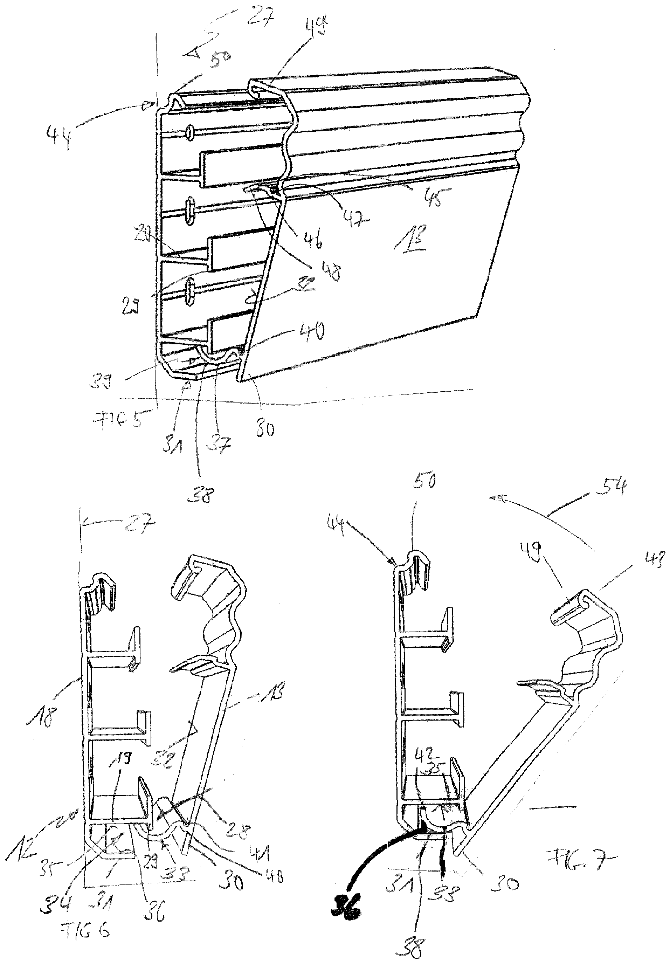

Das Zusammenwirken der Kanalabdeckung 13 mit der Kanalbasis 12 soll nachfolgend anhand der **Fig. 5** bis **7** näher erläutert werden.

**Fig. 5** zeigt eine erste Phase bei der Montage der Kanalabdeckung 13 auf der Kanalbasis 12. Hierzu ist die Kanalabdeckung 13 mit ihrem unteren Längsrand 30 so gegen einen unteren Längsrand 31 der an einer Installationsfläche 27 bereits montierten Kanalbasis 12 positioniert, dass ein im Bereich des unteren Längsrandes 30 an eine Innenseite 32 angeordnete Stützsteg 33 in einen Auflagerkanal 34 mit zwei parallelen Stützwänden 35, 36 eingreift, wobei die obere Stützwand 35 durch den untersten Trennsteg 19 gebildet wird.

Wie insbesondere die **Fig. 6** weiter zeigt, ist in der dargestellten Relativkonfiguration der Kanalbasis 12 und der Kanalabdeckung 13 der nach unten von dem unteren Trennsteg 21 vorragende Raststeg 29 ohne Funktion und in einem durch eine konkave Oberfläche des Stützstegs 33 begrenzten Freiraum 28 aufgenommen. Wie **Fig. 6** und auch **Fig. 5** weiter zeigt, weist der Stützsteg 33 ein rillenförmiges Stegprofil 37 auf, mit einer konvexen Oberfläche 38 der Unterseite 39 und einen im Anschlussbereich des Stützstegs 33 zur Innenseite 32 der Kanalabdeckung 14 ausgebildeten Stützstegfuß 40, der an seiner Oberseite eine Rastnut 41 aufweist.

Wenn, wie in **Fig. 7** dargestellt, in der Einlegekonfiguration des Kabelkanals 10 der Stützsteg 33 so weit in den Auflagerkanal 34 eingeführt ist, dass eine an der Unterseite des Stützstegs ausgebildete Stützfläche 48 auf der unteren Stützwand 36 aufliegt und gleichzeitig die Kanalabdeckung 13 so weit gegenüber der Kanalbasis 12 aufgeschwenkt ist, dass ein am Stützsteg 33 ausgebildeter Stützrand 42 gegen die obere Stützwand 35 anliegt, ist eine Relativposition zwischen der Kanalabdeckung 13 und der Kanalbasis 12 erreicht, in der die Kanalabdeckung 13 ohne weitere Unterstützung selbsttätig an der Kanalbasis 12 gehalten wird.

Bei dem Aufschwenken der Kanalabdeckung 13 gegenüber der Kanalbasis 12 dient der Stützsteg 33 als Scharnier. In der in **Fig. 7** dargestellten Einlegekonfiguration ist zwischen dem Stützrand 42 des Stützstegs 33 sowie der Stützfläche 48 und dem unteren Stützrand 36 des Auflagerkanals 34 eine die Kanalabdeckung 14 in der Relativposition gegenüber der Kanalbasis 12 sichernde Momentenstütze ausgebildet.

Zur verriegelnden Verbindung zwischen der Kanalabdeckung 13 und der Kanalbasis 12 kann ausgehend von der in **Fig. 7** dargestellten Einlegekonfiguration mittels einer Schwenkbewegung 54 der obere Längsrand 43 der Kanalabdeckung 13 gegen einen oberen Längsrand 44 der Kanalbasis 12 verschwenkt werden. Am Ende der Schwenkbewegung 54, in der die in **Fig. 2** dargestellte geschlossene Konfiguration des Kabelkanals 10 erreicht ist, kommen bei dem hier dargestellten Ausführungsbeispiel insgesamt drei Verbindungseinrichtungen 15, 16, 17 zum Einsatz, wobei die Verbindungseinrichtung 15 am unteren Längsrand 30 der Kanalabdeckung 14 durch einen verrastenden Eingriff des Raststegs 29 in die im Stützstegfuß 40 ausgebildete Rastnut 41 hergestellt wird.

Die Verbindungseinrichtung 16 weist, wie **Fig. 5** zeigt, einen wie der Stützsteg 33 an der Innenseite 32 der Kanalabdeckung 13 ausgebildeten Verriegelungssteg 45 auf, mit einer an einem Verriegelungsstegfuß 46 ausgebildeten Rastnut 47 zum verrastenden Eingriff mit dem an dem mittleren Trennsteg 20 der Kanalbasis 12 ausgebildeten Raststeg 29. Darüber hinaus ist der Verriegelungssteg 45 mit einer an den Verriegelungsstegfuß 46 anschließenden, formelastischen Führungslasche 48 versehen, die als Einführhilfe wirkt zum Einführen des Raststegs 29 in die Rastnut 47.

Zur Ausbildung der dritten Verbindungseinrichtung 17 am oberen Längsrand 43 der Kanalabdeckung 13 ist an der Kanalabdeckung 13 ein Rastrand 49 vorgesehen, der einen Rastrand 50 am oberen Längsrand 44 der Kanalbasis 12 übergreift.

In der beispielsweise in **Fig. 2** dargestellten Verriegelungsposition füllt der Rastrand 49 der Kanalabdeckung 13 beim Rasteingriff mit der Kanalbasis 12 eine zwischen der Installationsfläche 27 und dem Rastrand 50 der Kanalbasis 12 ausgebildete Aufnahmenut 52 im Wesentlichen vollständig aus.

Wie insbesondere **Fig. 2** zeigt, weist der obere Trennsteg 21 eine geringere Breite b1 auf als die darunter liegenden Trennstege 19, 20 mit einer Breite b2, sodass im Bereich des oberen Trennstegs 21 die Kanalabdeckung 13 eine stark profilierte Dekorkontur 53 aufweisen kann, ohne dass hiermit eine Erhöhung der Gesamtbreite B des Kabelkanals verbunden wäre.

## Patentansprüche

1. Kabelkanal (10, 11) mit einer Kanalbasis (12) zur Montage an einer Installationsfläche (27) und eine Kanalabdeckung (13, 14) zur Anordnung auf der Kanalbasis, wobei die Kanalbasis zur Unterteilung eines Leitungsaufnahmeraums in einzelne Kanalabteile (22, 23, 24) an einer Montagerückwand (18) der Kanalbasis zumindest zwei Trennstege (19, 20, 21) aufweist, die an ihren freien Enden mit eine Leitungsauflagefläche begrenzenden Rückhaltestegen versehen sind, wobei zur Verbindung der Kanalabdeckung mit der Kanalbasis eine Verbindungsanordnung mit zumindest zwei Verbindungseinrichtungen (15, 16, 17) vorgesehen ist,
wobei eine benachbart einem unteren Längsrand (31) des Kabelkanals ausgebildete Verbindungseinrichtung (15) zumindest abschnittsweise einen sich in Längsrichtung des Kabelkanals erstreckenden, an einer Innenseite (32) der Kanalabdeckung angeordneten Stützsteg (33) aufweist, mit einer auf seiner Unterseite (39) ausgebildeten Stützfläche (38) und einem an seinem freien Ende ausgebildeten Stützrand (42), wobei der Stützsteg in einen am unteren Längsrand der Kanalbasis ausgebildeten Auflagerkanal (34) mit zwei einander gegenüber liegenden Stützwänden (35, 36) eingreift wobei die obere Stützwand (35) durch den untersten Trennsteg (19) gebildet wird, derart, dass in einer Einlegekonfiguration des Kabelkanals, in der zwischen einem oberen Längsrand (44) der Kanalbasis und einem oberen Längsrand (43) der Kanalabdeckung ein Einlegespalt zum Einlegen von Leitungen in den Leitungsaufnahmeraum der Kanalbasis ausgebildet ist, und der Stützsteg (33) in den Auflagerkanal (34) eingeführt ist, zwischen dem Stützrand (42) des Stützstegs und der oberen Stützwand (35)des Auflagerkanals sowie der Stützfläche (38) des Stützstegs (33) und der unteren Stützwand (36) des Auflagerkanals eine die Kanalabdeckung an der Kanalbasis sichernde Momentenstütze ausgebildet ist, wobei die Stützfläche (38) durch eine konvexe Oberfläche der Unterseite (39) des Stützstegs (33) gebildet ist,
wobei der Stützsteg (33) auf seiner Oberseite einen Freiraum (28) aufweist, in den ein am freien Ende der oberen Stützwand ausgebildeter Raststeg (29) hinein ragt, und an einem im Anschlussbereich des Stützstegs (33) zur Innenseite (32) der Kanalabdeckung (14) ausgebildeten Stützstegfuß (40), an seiner Oberseite eine Rastnut (41) ausgebildet ist, derart, dass ausgehend von der Einlegekonfiguration zur verriegelnden Verbindung zwischen der Kanalabdeckung (13, 14) und der Kanalbasis (12) ein verrastender Eingriff des Raststegs (29) in die Rastnut (41) erfolgt.

2. Kabelkanal nach Anspruch 1,
wobei der Stützsteg (33) ein an den Stützstegfuß (40) anschließendes rinnenförmiges Stegprofil (37) aufweist.

3. Kabelkanal nach einem der vorangehenden Ansprüche,
wobei die obere Stützwand (35) des Auflagerkanals (34) durch einen Trennsteg (19) der Kanalbasis (12) gebildet ist.

4. Kabelkanal nach einem der vorangehenden Ansprüche,
wobei zur Ausbildung der zweiten Verbindungseinrichtung (16) an der Innenseite (32) der Kanalabdeckung (13, 14) ein Verriegelungssteg (45) ausgebildet ist, mit einer an einem Verriegelungsstegfuß (46) ausgebildeten Rastnut (47) zum verrastenden Eingriff mit einem an einem Trennsteg (20) der Kanalbasis ausgebildeten Raststeg (29), und einer an den Verriegelungsstegfuß anschließenden, formelastischen Führungslasche (48) mit einer mit dem Raststeg (29) des Trennstegs (20) zusammen wirkenden Führungsfläche.

5. Kabelkanal nach einem der vorangehenden Ansprüche,
wobei zur Ausbildung einer dritten Verbindungseinrichtung (17) am oberen Längsrand (43) der Kanalabdeckung (13, 14) ein einen Rastrand (50) am oberen Längsrand (44) der Kanalbasis (12) übergreifender Rastrand (49) ausgebildet ist, wobei der Rastrand (50) der Kanalbasis in einem zu einer Installationsfläche (27) zur Befestigung der Montagerückwand (18) ausgebildeten Abstand angeordnet ist, derart, dass der Rastrand (49) der Kanalabdeckung bei einem Rasteingriff mit der Kanalbasis eine zwischen der Installationsfläche und dem Rastrand der Kanalbasis gebildete Aufnahmenut (52) im Wesentlichen vollständig ausfüllt.

6. Kabelkanal nach einem der vorangehenden Ansprüche,
wobei die Trennstege (19, 20, 21) eine unterschiedliche Stegbreite b1, b2 aufweisen.

7. Kabelkanal nach Anspruch 6,
wobei der dem oberen Längsrand (44) der Kanalbasis (12) benachbarte Trennsteg (21) eine geringere Stegbreite aufweist, als der darunter liegende Trennsteg (20).

## Claims

1. A cable duct (10, 11) comprising a duct base (12) for being mounted on an installation surface (27) and a duct cover (13, 14) for being disposed on the duct base, the duct base comprising at least two separating webs (19, 20, 21) for dividing a cable receiving space into individual duct compartments (22, 23, 24) on a rear mounting wall (18) of the duct base, the separating webs being provided with retaining webs limiting a cable support surface at their free ends, a connecting arrangement comprising at least two connectors (15, 16, 17) being provided for connecting the duct cover to the duct base, a connector (15) formed adjacent to a lower longitudinal edge (31) of the cable duct at least partially having a support web (33) which is disposed on an inner side (32) of the duct cover and extends in the longitudinal direction of the cable duct, the support web having a support surface (38) formed on its underside (39) and a support edge (42) formed at its free end, the support web engaging a bearing channel (34) which is formed at the lower longitudinal edge of the duct base and has two opposite support walls (35, 36), the upper support wall (35) being formed by the lowermost separating web (19), in such a manner that in an insertion configuration of the cable duct, in which an insertion gap for inserting cables into the cable receiving space of the duct base is formed between an upper longitudinal edge (44) of the duct base and an upper longitudinal edge (43) of the duct cover and the support web (33) has been introduced into the bearing channel (34), a torque support securing the duct cover on the duct base is formed between the support edge (42) of the support web and the upper support wall (35) of the bearing channel and between the support surface (38) of the support web (33) and the lower support wall (36) of the bearing channel, the support surface (38) being formed by a convex surface of the underside (39) of the support web (33), the support web (33) having a free space (28) on its upper side, a catch web (29) formed at a free end of the upper support wall engaging said free space, and a catch groove (41) being formed on an upper side of a support web base (40), which is formed in the area of connection of the support web (33) to the inner side (32) of the duct cover (14), in such a manner that starting from the insertion configuration, the catch web (29) engages the catch groove (41) in a catching manner to establish a locking connection between the duct cover (13, 14) and the duct base (12).

2. The cable duct according to claim 1,
wherein the support web (33) has a gutter-shaped web profile (37) adjacent to the support web base (40).

3. The cable duct according to any one of the preceding claims,
wherein the upper support wall (35) of the bearing channel (34) is formed by a separating web (19) of the duct base (12).

4. The cable duct according to any one of the preceding claims,
wherein a locking web (45) is formed on the inner side (32) of the duct cover (13, 14) for forming the second connector (16), the locking web having a catch grove (47), which is formed on a locking web base (46) and serves to establish a catching engagement with a catch web (29) formed on a separating web (20) of the duct base, and a dimensionally elastic guide tab (48) adjacent to the locking web base, the guide tab having a guide surface interacting with the catch web (29) of the separating web (20).

5. The cable duct according to any one of the preceding claims,
wherein, for forming a third connector (17), a catch edge (49) engaging a catch edge (50) at the upper longitudinal edge (44) of the duct base (12) is formed on the upper longitudinal edge (43) of the duct cover (13, 14), the catch edge (50) of the duct base being disposed at a distance from an installation surface (27), which serves to attach the rear mounting wall (18), in such a manner that the catch edge (49) of the duct cover essentially entirely fills a receiving groove (52), which is formed between the installation surface and the catch edge of the duct base, when the catch edge of the duct cover is in catching engagement with the duct base.

6. The cable duct according to any one of the preceding claims,
wherein the separating webs (19, 20, 21) have different web widths b1, b2.

7. The cable duct according to claim 6,
wherein the separating web (21) adjacent to the upper longitudinal edge (44) of the duct base (12) has a smaller web width than the separating web (20) located below it.

## Revendications

1. Goulotte de câblage (10, 11) comprenant une base de goulotte (12) pour être installée sur une surface d'installation (27) et un couvercle de goulotte (13, 14) pour être disposé sur la base de goulotte, la base de goulotte comprenant au moins deux âmes de séparation (19, 20, 21) pour diviser un espace de logement de câble en compartiments de goulotte (22, 23, 24) individuels sur une paroi d'installation arrière (18) de la base de goulotte, les âmes de séparation étant munies d'âmes de retenue limitant une surface d'appui de câble à leurs extrémités libres, un ensemble de connexion comprenant au moins deux connecteurs (15, 16, 17) étant fourni pour connecter le couvercle de goulotte à la base de goulotte, un connecteur (15) formé adjacent à un bord longitudinal (31) inférieur du goulotte de câblage ayant au moins partiellement une âme de support (33) qui est disposée sur un côté intérieur (32) du couvercle de goulotte et qui s'étend dans la direction longitudinale de la goulotte de câblage, l'âme de support ayant une surface de support (38) formée sur son côté inférieur (39) et un bord de support (42) formé à son extrémité libre, l'âme de support venant en prise dans un canal d'appui (34) qui est formé au bord longitudinal inférieur de la base de goulotte et qui a deux parois de support (35, 36) opposées, la paroi de support (35) supérieure étant formée par l'âme de séparation (19) la plus inférieure, de telle manière que dans une configuration d'insertion de la goulotte de câblage, dans laquelle un entrebâillement d'insertion pour insérer des câbles dans l'espace de logement de câble est formé entre un bord longitudinal (44) supérieur de la base de goulotte et un bord longitudinal (43) supérieur du couvercle de goulotte et l'âme de support (33) a été inséré dans le canal d'appui (34), un support de couple fixant le couvercle de goulotte sur la base de goulotte est formé entre le bord de support (42) de l'âme de support et la paroi de support (35) supérieure du canal d'appui et entre la surface de support (38) de l'âme de support (33) et la paroi de support (36) inférieure du canal d'appui, la surface de support (38) étant formée par une surface convexe du côté inférieur (39) de l'âme de support (33), l'âme de support (33) ayant un espace libre (28) sur son côté supérieur, une âme d'encliquetage (29) formée à une extrémité libre de la paroi de support supérieure venant en prise dans ledit espace libre, et une rainure d'encliquetage (41) étant formée sur un côte supérieur d'une base d'âme de support (40), qui est formée dans la région de connexion de l'âme de support (33) au côté intérieur (32) du couvercle de goulotte (14), de telle manière qu'à partir de la configuration d'insertion, l'âme d'encliquetage (29) vient en prise dans la rainure d'encliquetage (41) par encliquetage de manière à établir une connexion verrouillante entre le couvercle de goulotte (13, 14) et la base de goulotte (12).

2. Goulotte de câblage selon la revendication 1,
dans laquelle l'âme de support (33) a un profil d'âme (37) en forme de gouttière adjacent à la base d'âme de support (40).

3. Goulotte de câblage selon l'une quelconque des revendications précédentes,
dans laquelle la paroi de support (35) supérieure du canal d'appui (34) est formée par une âme de séparation (19) de la base de goulotte (12).

4. Goulotte de câblage selon l'une quelconque des revendications précédentes,
dans laquelle une âme de verrouillage (45) est formée sur le côté intérieur (32) du couvercle de goulotte (13, 14) de manière à former le deuxième connecteur (16), l'âme de verrouillage ayant une rainure d'encliquetage (47), qui est formée sur une base d'âme de verrouillage (46) et sert à venir en prise encliquetante avec une âme d'encliquetage (29) formée sur une âme de séparation (20) de la base de goulotte, et une languette de guidage (48) adjacent à la base d'âme de verrouillage, l'âme de guidage ayant de l'élasticité de forme et ayant une surface de guidage qui interagit avec l'âme d'encliquetage (29) de l'âme de séparation (20).

5. Goulotte de câblage selon l'une quelconque des revendications précédentes,
dans laquelle, pour former un troisième connecteur (17), un bord d'encliquetage (49) venant en prise sur un bord d'encliquetage (50) au bord longitudinal (44) supérieur de la base de goulotte (12) est formé au bord longitudinal (43) supérieur du couvercle de goulotte (13, 14), le bord d'encliquetage (50) de la base de goulotte étant disposé à une distance d'une surface d'installation (27), qui sert à fixer la paroi d'installation arrière (18), de telle manière que le bord d'encliquetage (49) du couvercle de goulotte remplit essentiellement complètement une rainure de logement (52), qui est formée entre la surface d'installation et le bord d'encliquetage de la base de goulotte, quand le bord d'encliquetage du couvercle de goulotte est en prise d'encliquetage avec la base de goulotte.

6. Goulotte de câblage selon l'une quelconque des revendications précédentes,
dans laquelle les âmes de séparation (19, 20, 21) ont des largeurs d'âme b1, b2 différentes.

7. Goulotte de câblage selon la revendication 6,
dans laquelle l'âme de séparation (21) adjacente au bord longitudinal (44) supérieur de la base de goulotte (12) a une largeur d'âme inférieure à celle de l'âme de séparation (20) sous-jacente.
